# EUROPÄISCHE PATENTANMELDUNG

(11) **EP 0 829 314 A1**
(43) Veröffentlichungstag der Anmeldung: **18.03.1998**
(21) Anmeldenummer: 97113100.8
(22) Anmeldetag: 30.07.1997
(51) Int. Cl.: B21B 31/07, F16C 13/02

(54) **Lagerung für biegesteife Mantelwalzen auf einer Tragachse oder Tragwelle**

(30) Priorität: 14.09.1996 DE 19637584
(71) Anmelder: SMS SCHLOEMANN-SIEMAG AKTIENGESELLSCHAFT, 40237 Düsseldorf (DE)
(72) Erfinder: Denker, Wolfgang, Dipl.-Ing., 57258 Freudenberg (DE)
(74) Vertreter: Valentin, Ekkehard, Dipl.-Ing.

(57) **Zusammenfassung**

Eine Lagerung für biegesteife Mantelwalzen auf einer Tragachse oder einer Tragwelle. Die Lager sind als sphärische Gleit-, Kugel- oder Wälzlager ausgebildet und können auf der Tragachse (4) bzw. der Tragwelle abstandsverstell- und festlegbar angeordnet und als Ölfilmlager ausgebildet sein.

## Beschreibung

Die Erfindung betrifft eine Lagerung für biegesteife Mantelwalzen auf einer Tragachse oder einer Tragwelle. Diese Lagerungen sind, insb. bei Mantelwalzen für Walzgerüste in der Form von Radiallagern in die beiden Enden des Walzenkörpers eingesetzt. Angewendet werden derart gelagerte Mantelwalzen für verschiedenste Zwecke, besonders dort, wo eine leichte Bauweise erwünscht ist und ggfs. auch wertvolle Werkstoffe für die Bildung von besonders widerstandsfähigen Walzenumfangsflächen gefordert werden.

Der Erfindung liegt die Aufgabe zugrunde, den Mantelwalzen neue Anwendungsgebiete zu erschließen, besonders solche, bei denen die Walze mehr oder weniger großen Biegebeanspruchungen unterworfen ist, wobei der Walzenkörper gegenüber diesen Biegebeanspruchungen möglichst formstabil gehalten bleiben soll.

Derartige Anwendungsgebiete sind in erster Linie die Walzen von Walzgerüsten für das Walzen von Metallbändern. In diesen Walzgerüsten werden die Walzkräfte durch auf dem Band aufliegende Arbeitswalzen aufgebracht und müssen dabei möglichst gleichmäßig über die gesamte Länge der Walze verteilt werden, d.h. die Berührungslinie zwischen dem Umfang der Walze und dem Band muß geradlinig verlaufen. Um dies sicherzustellen, werden auf die Arbeitswalzen, die Walzkraft übertragende massive Stützwalzen aufgelegt, die einen großen Durchmesser und ein entsprechend großes Gewicht aufweisen, um damit eine, entsprechend große, die Geradlinigkeit der Berührungslinie der Stützwalze auf der Arbeitswalze sicherstellende Biegesteifigkeit aufweisen.

Nach der Erfindung läßt sich diese Biegesteifigkeit für den genannten und andere Anwendungszwecke auch bei Mantelwalzen erreichen, wenn die Lager der Walze als sphärische Gleit-, Kugel- oder Wälzlager ausgebildet sind. Diese sphärischen, im Bereich der beiden Enden oder auch ggfs. einzeln in der Längsmitte der Walze angeordneten Lager werden dabei so angeordnet und bemessen, daß die Stützkräfte, die sich bei Aufbringen der Walzkraft auf die, die Enden der Tragwelle bzw. der Tragachse der Mantelwalze aufnehmenden Tragstücke bzw. Lagereinbaustücke als Biegekräfte auf diese Tragwelle bzw. Tragachse auswirken, den zylindrischen Mantel der Mantelwalze nicht beeinflussen mit der Folge, daß dessen Berührungslinie mit dem Umfang der Arbeitswalze weiterhin geradlinig verläuft.

Mit dieser formstabilen Ausbildung der Stützwalze lassen sich auch die, bei Verwendung der bekannten, schweren massiven Stützwalzen durch eine höhere Belastung der Wandlängsränder entstehenden Verringerungen der Banddicke, die sog. edge drops besser ausgleichen.

Die erfindungsgemäße Ausbildung der Stützwalze erlaubt es auch, die Arbeitswalzen kleiner auszuführen und dabei entsprechend kleinere Lagereinbaustücke für diese Arbeitswalzen zu verwenden. Der Verschleiß über die Ballenlänge der Walzen wird gleichmäßiger, da sich die Walzkräfte gleichmäßiger verteilen.

Beim Walzen mit CVC-Schliff kann dieser eine geringere Amplitude aufweisen. Fertigung und Nachschliff werden dadurch erleichtert. Mit der geringeren Amplitude des CVC-Schliffs ergeben sich kleinere Schiebewege für die Walze mit der Folge, daß auch Verschiebevorrichtungen entsprechend kleiner bemessen werden können; ggfs. ist in diesen Anwendungsfällen sogar keine Verschiebevorrichtung mehr nötig, weil die Biegung selbst bereits ausreicht.

Bei der Verwendung von Arbeitswalzen mit Crown-Schliff kann dieser ebenfalls kleiner bemessen werden, da die bisher auftretende Durchbiegung der Stützwalze nicht mehr berücksichtigt werden muß.

Der Verschleiß am Umfang der Arbeitswalzen wird geringer, weil bei beiden Walzen keine nennenswerten Abweichungen der Umfangsgeschwindigkeiten entlang der Berührungslinie mehr auftreten.

Die erfindungsgemäß gelagerte Mantelwalze eignet sich nicht nur als Stützwalze z.B. in Vier- und Mehrwalzengerüsten, sondern auch in Duo-Walzgerüsten.

Die sphärischen Lager auf der Tragachse bzw. der Tragwelle können, wie die Erfindung weiter vorsieht, abstandsverstell- und -festlegbar angeordnet werden. Es besteht weiter die Möglichkeit, die Gleitlager als Ölfilmlager auszubilden, wobei diese in Achsrichtung beabstandete Reihen von Druckölzuführöffnungen aufweisen und diese Reihen wahlweise mit Drucköl beaufschlagbar sind. Bei Verwendung in einem Mehrwalzengerüst kann die Tragachse bzw. die Tragwelle der erfindungsgemäßen Mantelwalze in Tragstücken sitzen- bzw. Lagereinbaustücken lagern, die in Fenstern der Ständer des Walzgerüstes geführt sind. Bei angetriebenen Mantelwalzen kann die Tragwelle der Mantelwalze eine Außenverzahnung und die Mantelwalze eine Innenverzahnung aufweisen, die miteinander kämmen; es ist auch möglich, die Anordnung so zu treffen, daß die Mantelwalze eine mit einem Antriebsritzel kämmende Verzahnung aufweist. Die sphärischen Lager sind nach einem weiteren Vorschlag der Erfindung zwischen den Stirnseiten der Mantelwalze angeordnet.

Die Erfindung wird anhand des in der Zeichnung dargestellten Ausführungsbeispiels näher erläutert. In der Zeichnung zeigen
- Figur 1: ein Quarto-Walzgerüst, in Walzrichtung gesehen, teilweise geschnitten in schematischer Darstellung,
- Figur 2: eine Einzelheit aus Fig. 1 in vergrößertem Maßstab, ebenfalls teilweise geschnitten, und
- Figur 3: ein Diagramm der Walzenbiegelinie.

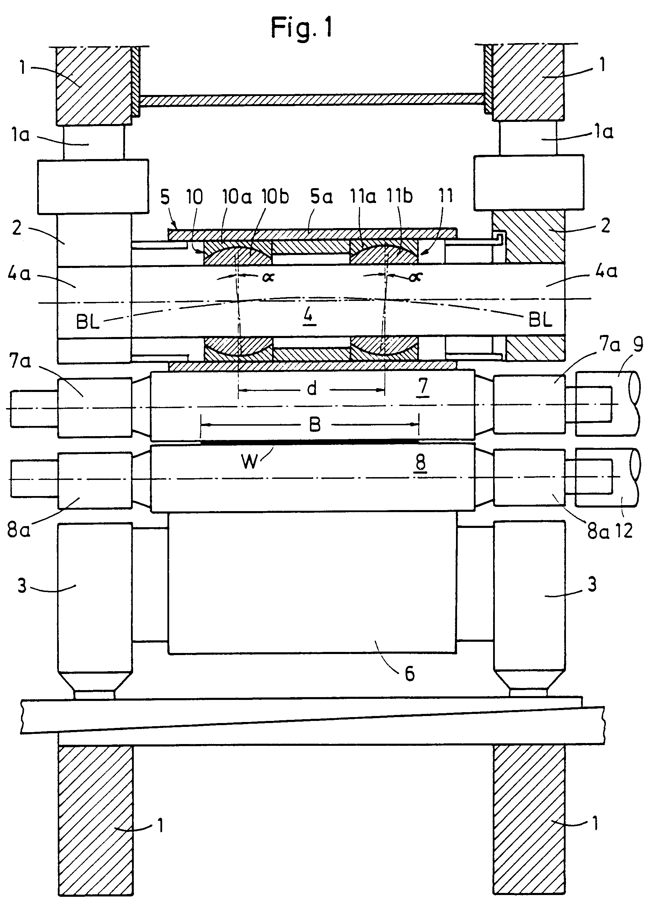

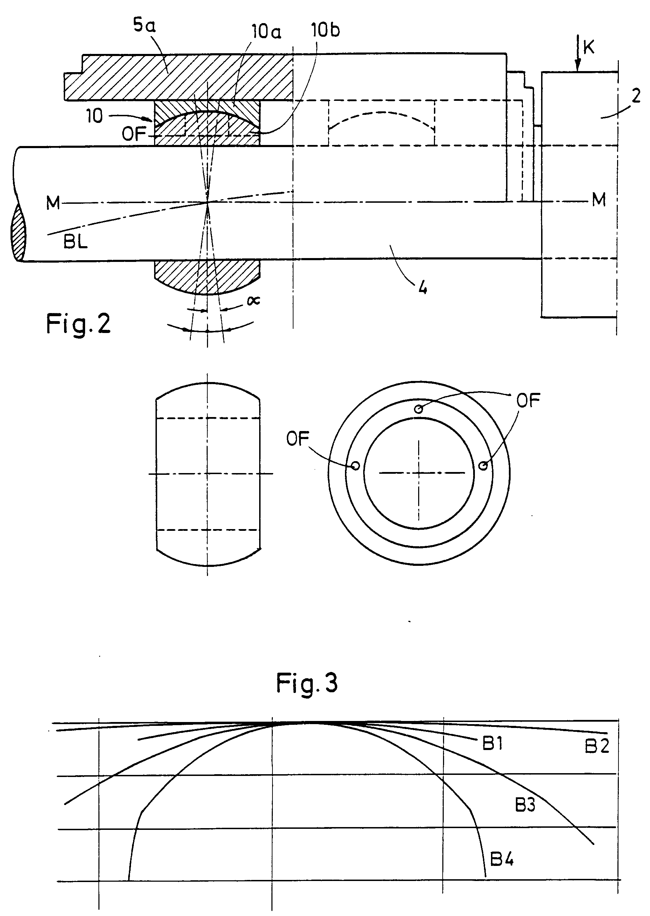

Wie aus Fig. 1 zu ersehen, sind in den Fenstern 1a der Ständer 1 eines Walzgerüstes vertikal verschiebbare obere Tragstücke 2 und untere Tragstücke 3 angeordnet, die die beiden Enden, hier der Tragachse 4 der oberen Mantelwalze 5 aufnehmen. Die untere Mantelwalze 6 ist, auf nicht dargestellte Weise, ebenso ausgebildet. Die Mantelwalze 5 liegt auf der oberen Arbeitswalze 7 auf, während die untere Arbeitswalze 8 auf der unteren Mantelwalze 6 aufliegt. Die beiden Arbeitswalzen 7 und 8 lagern jeweils in Lagereinbaustücken 7a bzw. 8a und werden über Kupplungen 9, 12 auf nicht dargestellte Weise angetrieben. Zwischen den beiden Arbeitswalzen 7, 8 befindet sich das zu walzende Walzband W. Der Mantel 5a der Mantelwalze 5, die hier, ebenso wie die Mantelwalze 6 eine Stützwalze für die Arbeitswalze 7 bzw. 8 eines Arbeitswalzenpaares darstellt, lagert (vgl. auch Fig. 2) mit zwei sphärischen Lagern 10 und 11 auf der Tragwelle 4. Der Mittenabstand d der Lager 10 und 11 ist hier kleiner gehalten als die Breite B des Walzbandes W.

Wie in Fig. 2 angedeutet, wird bei Beaufschlagung der Tragachse 4 über die Tragstücke 2 mit der Walzkraft in Richtung des Pfeils K deren Mittenachse MM biegebeaufschlagt und nimmt dabei die, strichpunktiert angedeutete Biegelinie BL ein. Die Innenringe 10b und 11b der beiden sphärischen Lager 10 und 11 nehmen dabei gegenüber den in dem Mantel 5a der Mantelwelle 5 sitzenden Außenringen eine entsprechende, mit α bezeichnete Winkelstellung, jeweils nach außen ein, während die Außenringe 10a, 11a ihre ursprüngliche Position beibehalten.

Die sphärischen Lager 10 und 11 sind hier beim Ausführungsbeispiel als Ölfilm-Gleitlager ausgebildet. Der Ölstrom wird den Lagern, wie in Fig. 2 mit OF angedeutet, in bekannter Weise von außen zugeleitet und tritt aus Zuführöffnungen in den Lagerspalt zwischen Außenring 10a, 11a und Innenring 10b, 11b ein.

Aus Fig. 3 gehen die vergleichbaren, das Walzspaltprofil bildenden Biegelinien der Arbeitswalzen hervor, die sich bei einer Versuchsanordnung ergaben. Bei einer Bandbreite zwischen 1050 mm und 1750 mm entsprechen die Biegelinien B1 und B2 denen, die bei Verwendung einer erfindungsgemäß gelagerten Mantelwalze entstanden, während die Biegelinien B3 und B4 denen entsprechen, die bei Verwendung einer konventionellen Walze entstanden.

## Patentansprüche

1. Lagerung für biegesteife Mantelwalzen auf einer Tragachse oder Tragwelle,
**dadurch gekennzeichnet,**
daß die Lager (10, 11) als sphärische Gleit-, Kugel- oder Wälzlager ausgebildet sind.

2. Lagerung nach Anspruch 1,
**dadurch gekennzeichnet,**
daß die Lager (10, 11) auf der Tragachse (4) bzw. der Tragwelle abstandsverstell- und -festlegbar angeordnet sind.

3. Lagerung nach Anspruch 1,
**dadurch gekennzeichnet,**
daß die Gleitlager als Ölfilmlager ausgebildet sind.

4. Lagerung nach Anspruch 3,
**dadurch gekennzeichnet,**
daß die Ölfilmlager, in Achsrichtung beabstandete Reihen von Druckölzuführöffnungen aufweisen.

5. Lagerung nach Anspruch 4,
**dadurch gekennzeichnet,**
daß die Reihen der Druckölzuführöffnungen wahlweise druckölbeaufschlagbar sind.

6. Lagerung nach einem oder mehreren der Ansprüche 1 bis 5 für Mantelwalzen in einem Querwalzengerüst,
**dadurch gekennzeichnet.**
daß die Tragachse bzw. die Tragwelle im, in Fenstern (1a) der Ständer (1) eines Walzgerüstes geführten Tragstücken (2) sitzt bzw. in Lagereinbaustücken lagert.

7. Lagerung nach Anspruch 6 für angetriebene Mantelwalzen,
**dadurch gekennzeichnet,**
daß die Tragwelle eine Außenverzahnung und die Mantelwelle eine Innenverzahnung aufweisen, die miteinander kämmen.

8. Lagerung nach Anspruch 6 für angetriebene Mantelwalzen,
**dadurch gekennzeichnet,**
daß die Mantelwalze eine, mit einem Antriebsritzel kämmende Verzahnung aufweist.

9. Lagerung nach Anspruch 6,
**dadurch gekennzeichnet,**
daß die Drehachsen von Mantelwalze und Antriebsritzel senkrecht zueinander verlaufend angeordnet sind.

10. Lagerung nach einem oder mehreren der Ansprüche 1 bis 9,
**gekennzeichnet durch**
Anwendung der Mantelwalze in einem Duo-Walzgerüst.

11. Lagerung nach Anspruch 1,
**gekennzeichnet durch**
Anordnung der Lager zwischen den Stirnseiten der Mantelwalze.
